# EUROPEAN PATENT SPECIFICATION

(11) **EP 2 487 847 B1**
(45) Date of publication and mention of the grant of the patent: **13.08.2014**
(21) Application number: 12167249.7
(22) Date of filing: 23.10.2006
(51) Int. Cl.: H04L 12/801, H04L 12/851, H04M 11/06

(54) **QoS control method and system**
Verfahren und System zur QOS-Kontrolle
Procédé et système de contrôle de la QOS

(30) Priority: 26.01.2006 CN 200610033451
(43) Date of publication of application: 15.08.2012
(62) Divisional of application: 06817791.4
(73) Proprietor: Huawei Technologies Co., Ltd., Longgang District, Shenzhen Guangdong 518129 (CN)
(72) Inventor: Huang, Yong, 518129 Shenzhen (CN)
(74) Representative: Körber, Martin Hans

(56) References cited:
- WO-A2-02/30056
- US-A1- 2002 188 732
- "3rd Generation Partnership Project; Technical Specification Group Radio Access Network; FDD Enhanced Uplink; Overall description; Stage 2 (Release 6)", 3GPP STANDARD; 3GPP TS 25.309, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.5.0, 1 December 2005 (2005-12-01), pages 1-34, XP050367621,

## Description

### FIELD OF THE INVENTION

The invention relates to a technology for the control of Quality of Service (QoS), and more particularly, to a method and a system for the control of QoS for an access network in a Next Generation Network (NGN).

### BACKGROUND

The technology for the control of QoS has become and will continue to be a key technology for a long time in the future. With the convergence of the networks and the IP realization of telecommunication services, especially with the development and maturation of the NGN, the QoS control in the NGN has become the focus of attention for all operators and network equipment providers.

The NGN is a network based on packet switching. A network based on packet switching is different from a network based on circuit switching. Circuit switching is connection-oriented, while packet switching is connectionless in nature. Therefore, it is very important to guarantee the continuity and quality of communications with high priority over a connectionless packet switching network. It is found that network congestion occurs mostly in the access network near the users; the reason is that the resources of the access network are limited. Applications such as QQ, video chatting and BT downloading consume much bandwidth. For a NGN, only increasing the access bandwidth is not enough, and QoS control is necessary in the cases of those applications, in order to meet the QoS requirements of communications with high priority. One of the typical QoS control method is based on call and flow control.

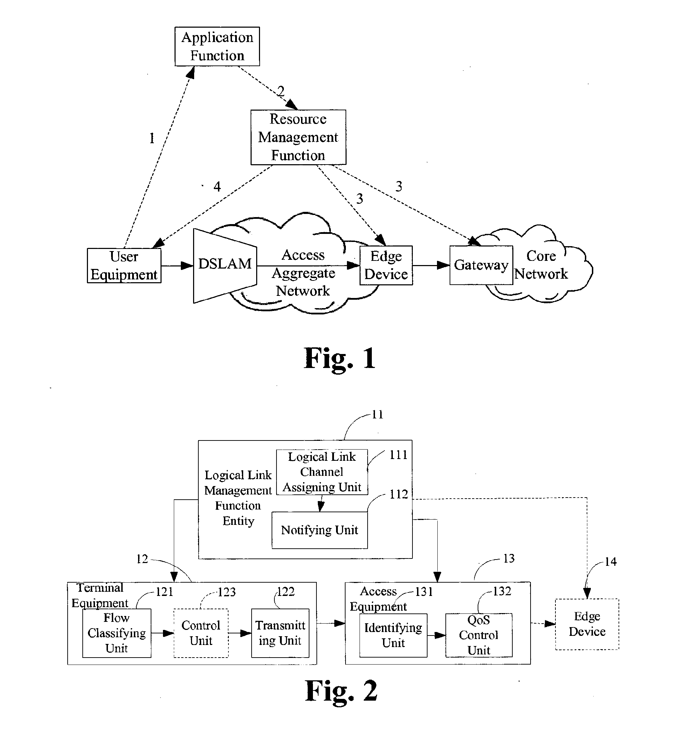

As shown in Figure 1, a QoS control method based on call admission control and flow control in NGN in a prior art is illustrated. Specifically, a typical bandwidth reservation process is as follows.

Step 1: A User Equipment (UE) communicates with an Application Function (AF) entity via application layer signaling. During the communication, the AF entity obtains QoS parameters required by a specific UE service.

Step 2: The AF entity requests a Resource Management Function (RMF) entity for resources of the specific UE service flow.

Step 3: The RMF entity determines whether the request is acceptable based on the network resources currently available and the resources available for a subscribed user. If the request for resources is acceptable, each of the network elements on the bearing channel, such as the edge device and the gateway illustrated in Figure 1, is controlled, in order to reserve or commit resources. An edge device is an access equipment at the edge of an aggregate network to a core network.

Step 4: The RMF entity may also notify the UE of the QoS parameters such as the bandwidth and priority of the specific service flow.

Seen from steps 1 to 4, it is obvious that the QoS control is only performed at the edge device and the gateway, etc.; however, as illustrated in Figure 1, the user data messages from a terminal equipment such as a UE access first an access equipment such as a Digital Subscriber Line Access Multiplexer (DSLAM). The user data messages may have already experienced congestion before they reach the edge device from the UE. In other words, the congestion may occur in the access aggregate network between the UE and the edge device. Therefore, it is urgent to solve the problem of performing QoS control in the access equipment of the access aggregation network, in order to guarantee QoS.

US 2002/188732 A1 discloses a system and method for allocating bandwidth across a network to and different end point nodes improves the predictability and efficiency of best effort network architectures. Advanced traffic processors associated with end point nodes detect and classify. A packet policy module of the advanced traffic processor allocates bandwidth by applying policy definitions, flow ID rules, and flow policy maps to prioritize packet flows, In one embodiment, bandwidth is allocated on demand on a per-download basis so that bulk file transfers are provided substantially reduced download times through allocation of bandwidth for a premium fee.

WO 2004/008698 A2 discloses a system for providing multiple quality of service classes to a subscriber using a terminal unit includes a gateway operable to communicate with a network and a base station coupled to the gateway. The base station is operable to communicate with the terminal unit over a wireless interface. The base station is further operable to identify a first quality of service class associated with the first packet and a second quality of service class associated with the second packet using quality of service information. The quality of service information is associated with the first and second applications, and at least a portion of the quality of service information is identified by a network address. In addition, the base station is operable to communicate the first packet to the terminal unit using the first quality of service class and to communicate the second packet to the terminal unit using the second quality of service class.

The document "3rd Generation Partnership Project; Technical Specification Group Radio Access Network; FDD Enhanced Uplink; Overall description; Stage 2 (Release 6)" (no. V6.5.0, 1 December 2005 (2005-12-01), pages 1-34) discloses a technical specification of the overall support of FDD Enhanced Uplink in UTRA.

US 2002/0188732 A1 discloses a system and method for allocating bandwidth across a network to and different end point nodes to improve the predictability and efficiency of best effort network architectures.

### SUMMARY

The present invention provides a method, a system and an equipment for QoS control in order to perform QoS control at an access equipment, to further improve QoS.

The present invention provides a method for QoS control, including:
receiving, by an access equipment (13), information about a logical link channel and a transmission priority of a flow from a logical link management function entity (11); wherein the logical link channel is assigned by the logical link management function entity (11) to a flow according to the transmission priority of the flow;
receiving, by the access equipment (13), a flow from a terminal equipment (12) via the logical link channel; wherein an information about a flow classification and the logical link channel is notified to the terminal equipment (12) by the logical link management function entity (11), and the flow is transmitted from the a terminal equipment (12) via the logical link channel after being classified into according to the flow classification ;
identifying, by the access equipment (13), a transmission priority of the flow received corresponding to the logical link channel according to a relationship between transmission priorities and logical link channels, in which the logical link channel is assigned to the flow according to the transmission priority of the flow; and
performing, by the access equipment (13), QoS control over the flow received via the logical link channel according to the transmission priority.
and the present invention also provides an access equipment, including: a logical link management function entity (11),
an identifying unit (131), configured to identify a transmission priority of a flow corresponding to a logical link channel according to a relationship between transmission priorities of flows and logical link channels of flows; wherein the logical link channel is assigned by the logical link management function entity (11) to a flow according to the transmission priority of the flow; and
a QoS control unit (132), configured to perform QoS control over a flow via the logical link channel according to the transmission priority corresponding to the logical link channel; wherein the flow is received from a terminal equipment (12) via the logical link channel; wherein a information about a flow classification and the logical link channel is notified to a terminal equipment (12) by the logical link management function entity (11), and the flow is transmitted from the a terminal equipment (12) via the logical link channel after being classified into according to the flow classification.

Compared with the prior art, the present invention has the following advantages.

By assigning a logical link channel for each flow transmitted according to the transmission priority of each flow, notifying the terminal equipment of information about the flow classification and information about the logical link channel assigned to each flow, and notifying an access equipment of information about the transmission priority of and the logical link channel assigned to each flow; by the terminal equipment, classifying, user data messages into each flow according to the information about the flow classification, and transmitting each flow to the access equipment via the logical link channel assigned; by the access equipment, performing QoS control, according to the logical link channel and the transmission priority of each flow, QoS control may be performed at the access equipment in the invention, in order to improve QoS. Furthermore, in the case that the terminal equipment is a user equipment in the invention, since only the information of the flow classification and the logical link channel are transmitted down to the user equipment, not transmitting the information about the transmission priority, it is possible to prevent a user from using illegally the information when the user knows the priority of the logical link channel, therefore making the terminal more reliable.

### BRIEF DESCRIPTION OF THE DRAWINGS

Figure 1 is a diagram illustrating a QoS control method based on call or application in NGN in a prior art;

Figure 2 is a diagram illustrating the structure of a QoS control system in an embodiment of the invention;

Figure 3 is a flowchart illustrating a QoS control method in an embodiment of the invention; and

Figure 4 is a diagram illustrating a QoS control in an embodiment of the invention.

### DETAILED DESCRIPTION

The invention will be further described in detail with reference to the figures, in order to make the objectives, the technical solution and the advantages of the present invention more clear.

In the prime idea of the invention, a logical link channel is assigned by a logical link management function entity between a terminal equipment and an access equipment based on a flow, to prevent a terminal equipment from using a logical link channel illegally, and to control the access equipment and the terminal equipment to perform the QoS control based on the logical link channel. The detailed description is as follows.

Referring to Figure 2, it is a diagram illustrating the QoS control system in the invention. The QoS control system in an embodiment of the invention includes mainly a Logical Link Management Function (LLMF) entity 11, a terminal equipment 12, an access equipment 13 and an edge device 14.

The LLMF 11 is configured to assign a logical link channel for each flow transmitted by a terminal equipment according to a transmission priority corresponding to each flow, notify the terminal equipment 12 of information about the flow classification and the logical link channel assigned, and notify the access equipment 13 of information about the logical link channel assigned and the transmission priority corresponding to the flow.

The information about the logical link channel may include an identification of the logical link channel.

Specifically, the logical link management function entity 11 may include a logical link channel assigning unit 111 and a notifying unit 112.

The logical link channel assigning unit 111 is configured to assign a logical link channel according to a transmission priority of each flow. Specifically, the logical link channel assigning unit 111 may assign a logical link channel to each flow according to the following rule.

When a logical link channel is assigned, each logical link channel is represented by an identification of the logical link channel, and the identification of the logical link channel is assigned randomly and discretely at each user side port of the access equipment. At the same time, different identifications of the logical link channel are assigned to different transmission priorities, different identifications or a same identification of the logical link channel is assigned to a same transmission priority. In other words, the identifications of the logical link channels for the same transmission priority may be the same or different, as long as the identifications for identifying the logical link channels are assigned randomly and discretely.

Moreover, the identification of the logical link channel may be an identification of a Virtual Local Area Network (VLAN ID) or an identification of a Permanent Virtual Circuit (PVC ID), or another identification which may distinguish a logical link channel from others, the description of which is omitted here.

The notifying unit 112 is configured to notify the terminal equipment of the information about the flow classification and the logical link channel assigned by the logical link channel assigning unit 111, and to notify the access equipment of the information about the transmission priority of each flow and the logical link channel assigned by the logical link channel assigning unit 111.

The terminal equipment 12 is configured to classify user data messages into each flow according to the flow classification information of the flows. The flows are transmitted to the access equipment via the logical link channel assigned. Specifically, the terminal equipment 12 in an embodiment of the invention may include a flow classifying unit 121 and a transmitting unit 122, in order to perform QoS control.

The flow classifying unit 121 is configured to classify the user data messages into each flow according to the information about flow classification.

The transmitting unit 122 is configured to transmit each flow classified to the access equipment via the logical link channel assigned.

The access equipment 13 is configured to perform QoS control according to the logical link channel and the transmission priority that each flow corresponds to. In order to perform QoS control, the access equipment 13 in an embodiment of the invention includes an identifying unit 131 and a QoS control unit 132.

The identifying unit 131 is configured to identify the transmission priority that each flow corresponds to according to the identification of the logical link channel.

The QoS control unit 132 is configured to perform QoS control over the flow transmitted via each logical link channel according to the transmission priority that each logical link channel identified corresponds to.

The logical link management function (LLMF) entity 11 is further configured to notify the terminal equipment 12 and the access equipment 13 of a parameter for bandwidth QoS control. The terminal equipment 12 is further configured to perform a bandwidth control for each flow according to the parameter for bandwidth QoS control after the user data messages are classified into flows. Specifically, a control unit 123 may be added in the terminal equipment 12 between the flow classifying unit 121 and the transmitting unit 122, and the bandwidth control over each flow is performed by the control unit 123 according to the parameter for bandwidth QoS control. After the transmission priority that the flow corresponds to is identified according to the identifications of different logical link channels, the access equipment 13 is further configured to perform QoS control over the flow transmitted via each logical link channel according to the transmission priority and the parameter for bandwidth QoS control that each logical link channel corresponds to. Specifically, the operation may be performed by the QoS control unit 132 in the access equipment 13.

The parameter for bandwidth QoS control may include the bandwidths for uplink and downlink transmissions. The bandwidths assigned for uplink and downlink transmissions from and to the terminal equipment 12 are the bandwidths for uplink and downlink transmissions of the logical link channel of the current flow respectively. The bandwidths assigned to uplink and downlink transmissions from and to the access equipment 13 may include the bandwidths for uplink and downlink transmissions of the logical link channel of the current flow, or the bandwidths for uplink and downlink transmissions of the combination of the current flow and the existing flows with the same priority at a single user side port, and/or the bandwidths for uplink and downlink transmissions of the combination of the current flow and the existing flows with the same priority at different user side ports.

The QoS control unit 132 may further include a user side QoS control unit and/or a network side QoS control unit.

The user side QoS control unit is configured to perform QoS control at the user side port over the received flow, according to the transmission priority that the logical link channel identified by the identifying unit 131 corresponds to and the bandwidth after the combination of flows received at the port with the same priority, or combine the bandwidths for uplink and downlink transmissions of the logical link channel of the current flows received and the bandwidths for uplink and downlink transmissions of the existing flows with the same priority at the port, perform QoS control at the user side port over the received flows based on the combined bandwidth and the transmission priority, and then transmit the flows after the QoS control to the edge device.

The network side QoS control unit is configured to perform QoS control at the network side port before the flow is transmitted, according to the transmission priority that the logical link channel at the port corresponds to and the bandwidth after combination of the flows received with the same priority at different user side ports, or combine the bandwidths for uplink and downlink transmissions of data flow with the same transmission priority at different user side ports at the network side port, perform QoS control based on the bandwidths after combination and the different transmission priority to which each combination corresponds, and then transmit the flows to the edge device.

Preferably, the QoS control system illustrated in Figure 2 further includes an edge device 14. Then, the notifying unit 112 of the logical link management function entity 11 may further be configured to transmit information about the correspondence between the newly assigned identification of the logical link channel and the flow directly or indirectly to the edge device 14. The identification of the logical link channel is taken by the edge device 14 as a matching parameter when the flows are classified. When the identification of the logical link channel marked by a user is transmitted transparently to the edge device, they are checked and matched by the edge device 14; the edge device 14 further continues the QoS control over the received flow transmitted.

It should be noted that the logical link management function entity 11 in an embodiment of the invention may be an independent equipment, or may be integrated in other equipments such as the access equipment or the resource management function entity.

The QoS control process is specifically described here below.

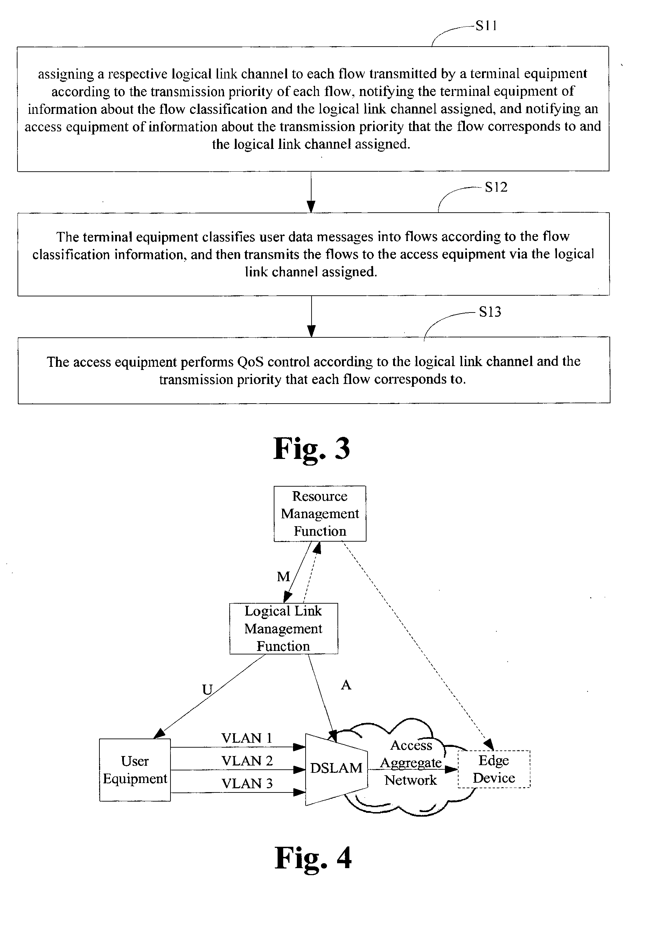

Referring to Figure 3, it is a flow chart illustrating a QoS control method in an embodiment of the invention. The method includes the following steps.

Step S11: assigning a respective logical link channel to each flow transmitted by a terminal equipment according to the transmission priority of each flow, notifying the terminal equipment of information about the flow classification and the logical link channel assigned, and notifying an access equipment of information about the transmission priority that the flow corresponds to and the logical link channel assigned.

The flow identification information includes the source IP address, the destination IP address, the source port, the destination port and the protocol type.

Specifically, the logical link channels are assigned to each flow according the following rule in an embodiment of the invention.

Each logical link channel is represented with the identification of the logical link channel when the logical link channel is assigned, and the identification of the logical link channel is assigned randomly and discretely at each user side port of the access equipment. At the same time, different identifications of the logical link channel are assigned to different transmission priorities, different identifications or a same identification of the logical link channel is assigned to a same transmission priority. In other words, the identifications of the logical link channels assigned to flows with the same transmission priorities may be the same or different, as long as the identifications for identifying the logical link channels are assigned randomly and discretely.

Step S12: The terminal equipment classifies user data messages into flows according to the flow classification information, and then transmits the flows to the access equipment via the logical link channel assigned.

Step S13: The access equipment performs QoS control according to the logical link channel and the transmission priority that each flow corresponds to.

It should be noted that the terminal equipment may also be notified of the parameter for bandwidth QoS control in step S11 of an embodiment of the invention. The terminal equipment may also perform bandwidth control over each flow according the parameter for bandwidth QoS control, after classifying the user data messages into flows. The parameter for bandwidth QoS control may include the bandwidths for uplink and downlink transmissions, and the bandwidths for uplink and downlink transmissions may be bandwidths for uplink and downlink transmissions of the logical link channel of the current flow.

Similarly, in step S11 of an embodiment of the invention, the access equipment may also be notified of the parameter for bandwidth QoS control. The access equipment identifies the transmission priorities to which the flows correspond according to different identifications of the logical link channels, and perform QoS control over the flow transmitted via each logical link channel according to the transmission priorities that each logical link channel correspond to and the parameter for bandwidth QoS control. The information about the parameters for the bandwidth control to and from the access equipment may include the bandwidths for uplink and downlink transmissions. The bandwidths for uplink and downlink transmissions may include the bandwidth for uplink and downlink transmissions of the logical link channel of the current flow, or the bandwidths for uplink and downlink transmissions after combination of the current flow with the same priority at a single user side port with the existing flows, and/or the bandwidths for uplink and downlink transmissions after combination of the current flow with the same priority at a different user side port with the existing flows.

Specifically, the QoS control performed by the access equipment may include a user side QoS control and a network side QoS control, or anyone of the two QoS controls. The user side QoS control refers to QoS control at the user side port by the access equipment for the flow just received according to the transmission priority that the logical link channel at the port corresponds to and the bandwidth after combination of the received flows with the same priorities at the port, or combining the bandwidths for uplink and downlink transmissions of the logical link channel of the current flow received and the bandwidths for uplink and down link transmissions of the existing flows at the port, performing QoS control based on the combined bandwidth and the transmission priority. The flow after the QoS control is performed is transmitted, i.e., transmitted to the edge device. The network side QoS control refers to performing QoS control at the network side port according to the transmission priority that the logical link channel at the port corresponds to and the combined bandwidth of the received flows with the same priority at different user side ports, or performing QoS control at the network side port based on the combined bandwidth and the different transmission priorities with which each combination associates after the data flows with the same transmission priorities at different user side ports are combined.

Furthermore, information about the correspondence between the identification of the newly assigned logical link channel and the flow may be transmitted to the edge device directly or indirectly in step S11, and a new step S14 may be added, in which the edge device takes also the identification of the logical link channel as a matching parameter of a flow classification when performing the flow classification. When the identification of the logical link channel identified by the user is transmitted to the edge device, they are checked and matched by the edge device, i.e., the edge device 14 continues the QoS control over the received flow.

The system and method are described below with a specific embodiment.

Referring to Figure 4, it is a diagram illustrating an embodiment of the QoS control in the invention. As illustrated in Figure 4, in order to compare the present invention with the prior art illustrated in Figure 1, an embodiment of the present invention takes as examples that the terminal equipment is UE and that the access equipment is DSLAM. As the logical link management function (LLMF) entity, an independent equipment is adopted in the embodiment, ant it has the following functions: substituting for the RMF to issue resource control commands to UE, assigning a logical link channel between the UE and the access equipment DSLAM based on flow, to prevent a user from using the logical link channel illegally, and controlling the access equipment DSLAM and UE to realize QoS control based on logical link channel.

To facilitate the description, the interface between RMF and UE is defined as a U interface, the interface between LLMF and access equipment DSLAM is defined as an A interface, and the interface between LLMF and RMF is defined as an M interface. In addition, to facilitate the description, VLAN ID of an Ethernet IEEE 802.1Q is used to identify the logical link channel in the embodiment. It should be noted that the invention is not limited to that. Any access technology using similar ID to identify a logical link channel, assigning an ID randomly and dynamically, falls in the scope of the invention.

Specifically, the process for implementing QoS is as follows.

Step 1: When a request to establish a QoS channel based on flow is received by an RMF and the request is accepted and controlled locally, a resource control command is transmitted to an LLMF entity through an M interface. The information carried includes: a user side port ID, a flow ID, flow classification information, QoS parameters for the bandwidths for uplink and downlink transmissions, and transmission priorities etc., in which the flow ID is an identifier for a flow assigned by an RMF entity. The flow ID may be used for control, and is not present in the data messages. The flow classification information usually means the IP five tuple information, including, a source IP address, a destination IP address, a source port, a destination port and a protocol type.

Step 2: After the request is received by the LLMF entity, a VLAN ID is assigned to each flow to identify the logical link channel used by the flow, such as VLAN 1, VLAN 2 and VLAN 3 shown in Figure 4. A VLAN ID is assigned in the following way: A VLAN ID is assigned randomly and is meaningful only at a certain user side port, and a VLAN ID may be reused between different user side ports. At a user side port, an assigned VLAND ID with the same priority may be assigned, and also a VLAND ID which is not used may be assigned randomly, but an assigned VLAND ID with different priority cannot be assigned. After a VLAND ID is released, the priority of a flow may be different from that before when the VLAN ID is once again re-assigned to the flow. A VLAN ID may also be assigned in other ways, which is not described in detail here.

It is assumed in an embodiment of the invention that a user side port includes N priorities, the transmission priority of the flow to be assigned is P, and then a VLAN may be assigned in the following way:

(a) The first VLAN ID to be assigned is randomly selected from the VLAN ID space. The VLAN ID is put into the set with priority P (It should be noted that once a VLAND ID is assigned, the VLAN ID corresponds to the transmission priority of the related flow, and it is said that the VLAND ID possesses an attribute of the priority). After the step, it may be said that the first assigned VLAND ID possesses the priority of P.

(b) If the VLAN ID assigned is not the first one, the subset with the same transmission priority in the set of assigned VLAN ID may be combined with the set of unassigned VLAN ID, to form a set for assignment. It is assumed that the set for assignment includes M samples, and a random number (RAND) is generated at the same time.

(c) The VLANs in the set for assignment are queued, and it is assumed that they are numbered from 1 to M.

(d) The VLAND ID value of the sample numbered S = (RAND MOD M) + 1 in the queue is extracted to be used as the newly assigned VLAND ID. In which, RAND MOD M is a RAND modulo M operation.

(e) The VLAND ID assigned in step (d) is assigned as a new VLAN ID, and the VLAN ID is put into the set of priority P. Then the process of assignment ends.

Step 3: If uplink and downlink flow data with priority of P already exists at the user side port, the LLMF entity combines the existing uplink and downlink flow bandwidth with priority of P at the user side port and the flow bandwidth of the new flow, and calculates the new bandwidths for uplink and downlink transmissions with priority of P at the user side port.

In this step, the LLMF entity may also combine the flows with the same transmission priorities from different user side ports at the network side, and calculate the new bandwidths for uplink and downlink transmissions with the priority of P from different user side ports at the network side.

Step 4: The LLMF entity transmits the information obtained in step 2 and 3 via the U interface down to UE, and via the A interface down to the access equipment, respectively.

When the control is enforced to the UE, the information transmitted includes: the flow classification information, the bandwidths for uplink and downlink transmissions of the logical link channel of the current flow, the newly assigned VLAN ID. The information about the transmission priorities are not necessary to be transmitted to UE. The UE classifies user data messages into different flows according the flow classification information and the corresponding VLAN ID, and a VLAN ID is assigned to the assigned flow. In the mean time, the UE may perform a bandwidth QoS control for each flow according to the bandwidths for uplink and downlink transmissions.

When controls are enforced to access equipments, the information transmitted may include: the port ID at the user side and the newly assigned VLAN ID, the bandwidths for uplink and downlink transmissions with the priority that the newly calculated VLAN ID corresponds to, information about the transmission priorities. It may further include: ID of the port at the network side of the access equipment, the transmission priority of the port at the network side, the newly calculated combined bandwidths for uplink and downlink corresponding to the priority.

The access equipment performs QoS control over ports at the user side, based on different transmission priorities, according the IDs of the ports at the user side, the VLAN ID, the transmission priorities, and the bandwidths for uplink and downlink transmissions at the user side port. Furthermore, the access equipment performs QoS control over ports at the network side, based on the combined flows with different transmission priorities, according the IDs of the ports at the network side, the transmission priorities of ports at the network side and the bandwidths for uplink and downlink transmissions with the respective transmission priority.

Step 5: Optionally, the LLMF entity returns information about the correspondence between the newly assigned VLAN ID and the flow ID to the RMF entity, and the RMF entity commands the edge device to use the VLAN ID information as a matching parameter when the flows are classified. When a VLAN ID identified by the user equipment is transmitted transparently to the edge device, the VLAN ID is checked and handled by the edge device.

In Step 3, the combination of flows and the calculation of the bandwidths for uplink and downlink transmissions based on the combined flows may not be performed. Instead, the bandwidths for uplink and downlink transmissions of the current flow may be transmitted directly to the access equipment. In Step 4, the access equipment combines the flows with a same priority at a port at the user side, and then performs QoS control based on the transmission priorities and the bandwidths for uplink and downlink transmissions; At a port at the network side, the access equipment combines the flows with a same priority from different user side ports, and then performs QoS control based on the transmission priorities and the bandwidths for uplink and downlink transmissions.

The descriptions presented above are only preferred embodiments of the invention, and are not intended to limit the scope of the invention. Any change, equivalent replacement, modifications within the principle of the invention all fall in the scope of the invention.

## Claims

1. A QoS control method, **characterized in that** it comprises:
receiving, by an access equipment (13), information about a logical link channel and a transmission priority of a flow from a logical link management function entity (11); wherein the logical link channel is assigned by the logical link management function entity (11) to a flow according to the transmission priority of the flow;
receiving, by the access equipment (13), a flow from a terminal equipment (12) via the logical link channel; wherein an information about a flow classification and the logical link channel is notified to the terminal equipment (12) by the logical link management function entity (11), and the flow is transmitted from the a terminal equipment (12) via the logical link channel after being classified into according to the flow classification;
identifying, by the access equipment (13), a transmission priority of the flow received corresponding to the logical link channel according to a relationship between transmission priorities and logical link channels, in which the logical link channel is assigned to the flow according to the transmission priority of the flow; and
performing, by the access equipment (13), QoS control over the flow received via the logical link channel according to the transmission priority.

2. The QoS control method according to claim 1, **characterized in that** the flow is one of flows into which user data message is classified by the terminal equipment (12).

3. The QoS control method according to claim 1, **characterized in that** the method further comprises:
receiving, a parameter for bandwidth QoS control;
and the step of performing QoS control over the flow via the logical link channel according to the transmission priority comprises:
performing QoS control over the flow via the logical link channel according to the transmission priority and the parameter for bandwidth QoS control.

4. The QoS control method according to any one of claims 1 to 3, **characterized in that**, in the relationship between transmission priorities of flows and logical link channels of flows :
different logical link channels are assigned to different transmission priorities; and
different logical link channels or the same logical link channel are assigned to the same transmission priorities.

5. The QoS control method according to claim 4, **characterized in that** the logical link channel assigned is identified with an identification of the logical link channel.

6. The QoS control method according to claim 5, **characterized in that** the identification of the logical link channel comprises an identification of a Virtual Local Area Network (VLAN ID) or an identification of a Permanent Virtual Circuit (PVC ID).

7. The QoS control method according to claim 3, **characterized in that** the step of performing QoS control over the flow via the logical link channel according to the transmission priority and the parameter for bandwidth QoS control comprises:
after receiving the flow, performing, QoS control for the received flow at a user side port, according to the transmission priority of the logical link channel at the port and the parameter for bandwidth QoS control; and/or
before transmitting the flow, performing, by the access equipment (13), QoS control at a network side port according to the parameter for bandwidth QoS control and the transmission priorities, after a number of logical channels with the same transmission priority from different user side ports at the network side port are combined.

8. The QoS control method according to claim 1, **characterized in that**, the logical link management function entity (11) is integrated in the access equipment (13).

9. An access equipment, **characterized by** comprising:
a logical link management function entity (11);
an identifying unit (131), configured to identify a transmission priority of a flow corresponding to a logical link channel according to a relationship between transmission priorities of a flow and logical link channels of flows; wherein the logical link channel is assignable by the logical link management function entity (11) to a flow according to the transmission priority of the flow; and
a QoS control unit (132), configured to perform QoS control over a flow via the logical link channel according to the transmission priority corresponding to the logical link channel; wherein the flow is receivable from a terminal equipment (12) via the logical link channel; wherein a information about a flow classification and the logical link channel is adapted to notify to a terminal equipment (12) by the logical link management function entity (11), and the flow is transmitted from the a terminal equipment (12) via the logical link channel after being classified into according to the flow classification.

10. The access equipment according to claim 9, **characterized in that** the access equipment is further configured to perform QoS control over the flow via the logical link channel according to a parameter for bandwidth QoS control corresponding to the logical link channel.

11. The access equipment according to claim 9, **characterized in that** the QoS control unit (132) comprises:
a user side QoS control unit, configured to perform QoS control over the received flow at a user side port side, according to the transmission priority to which the logical link channel at the port corresponds and the parameter for bandwidth QoS control; and/or
a network side QoS control unit, configured to perform QoS control at a network side port according to the parameters for bandwidth QoS control and flow transmission priorities after the flow with the same transmission priority from different user side ports at the network side port are combined, and before each flow is transmitted.

12. The access equipment according to any one of claims 9 to 11, **characterized in that**, the relationship between transmission priorities of flows and logical link channels of flows is transmitted from a logical link management function entity (11).

## Patentansprüche

1. QoS-Steuerungsverfahren, **dadurch gekennzeichnet, dass** es Folgendes umfasst:
Empfangen von Informationen über einen logischen Verbindungskanal und eine Übertragungspriorität eines Datenstroms durch eine Zugangsvorrichtung (13) von einer Funktionsentität (11) für das Management logischer Verbindungen; wobei der logische Verbindungskanal durch die Funktionsentität (11) für das Management logischer Verbindungen einem Datenstrom gemäß der Übertragungspriorität des Datenstroms zugewiesen wird;
Empfangen eines Datenstroms von einer Endgerätevorrichtung (12) über den logischen Verbindungskanal durch die Zugangsvorrichtung (13); wobei eine Information über eine Datenstrom-Klassifizierung und den logischen Verbindungskanal durch die Funktionsentität (11) für das Management logischer Verbindungen an die Endgerätevorrichtung (12) gemeldet wird und der Datenstrom von der Endgerätevorrichtung (12) über den logischen Verbindungskanal übertragen wird, nachdem er gemäß der Datenstromklassifizierung hinein klassifiziert worden ist;
Identifizieren einer Übertragungspriorität des empfangenen Datenstroms, der dem logischen Verbindungskanal entspricht, durch die Zugangsvorrichtung (13) gemäß einer Beziehung zwischen Übertragungsprioritäten und logischen Verbindungskanälen, in der der logische Verbindungskanal dem Datenstrom gemäß der Übertragungspriorität des Datenstroms zugewiesen ist; und
Ausführen von QoS-Steuerung über den Datenstrom, der über den logischen Verbindungskanal empfangen worden ist, durch die Zugangsvorrichtung (13) gemäß der Übertragungspriorität.

2. QoS-Steuerungsverfahren nach Anspruch 1, **dadurch gekennzeichnet, dass** der Datenstrom einer der Datenströme ist, in den die Anwenderdatennachricht durch die Endgerätevorrichtung (12) klassifiziert wird.

3. QoS-Steuerungsverfahren nach Anspruch 1, **dadurch gekennzeichnet, dass** das Verfahren ferner Folgendes umfasst:
Empfangen eines Parameters für Bandbreiten-QoS-Steuerung;
und der Schritt des Ausführen der QoS-Steuerung über den Datenstrom über den logischen Verbindungskanal gemäß der Übertragungspriorität Folgendes umfasst:
Ausfiihren von QoS-Steuerung über den Datenstrom über den logischen Verbindungskanal gemäß der Übertragungspriorität und dem Parameter für Bandbreiten-QoS-Steuerung.

4. QoS-Steuerungsverfahren nach einem der Ansprüche 1 bis 3, **dadurch gekennzeichnet, dass** in der Beziehung zwischen Übertragungsprioritäten von Datenströmen und logischen Verbindungskanälen von Datenströmen:
unterschiedliche logische Verbindungskanäle unterschiedlichen Übertragungsprioritäten zugewiesen sind; und
unterschiedliche logische Verbindungskanäle oder derselbe logische Verbindungskanal denselben Übertragungsprioritäten zugewiesen sind.

5. QoS-Steuerungsverfahren nach Anspruch 4, **dadurch gekennzeichnet, dass** der zugewiesene logische Verbindungskanal mit einer Kennung des logischen Verbindungskanals identifiziert wird.

6. QoS-Steuerungsverfahren nach Anspruch 5, **dadurch gekennzeichnet, dass** die Kennung des logischen Verbindungskanals eine Kennung eines virtuellen lokalen Netzes (Virtual Local Area Network, VLAN ID) oder eine Kennung einer virtuellen Festverbindung (Permanent Virtual Circuit, PVC ID) umfasst.

7. QoS-Steuerungsverfahren nach Anspruch 3, **dadurch gekennzeichnet, dass** der Schritt des Ausfahrens von QoS-Steuerung über den Datenstrom über den logischen Verbindungskanal gemäß der Übertragungspriorität und dem Parameter für Bandbreiten-QoS-Steuerung Folgendes umfasst:
nach dem Empfangen des Datenstroms Ausführen von QoS-Steuerung für den empfangenen Datenstrom an einem anwenderseitigen Anschluss gemäß der Übertragungspriorität des logischen Verbindungskanals an dem Anschluss und dem Parameter für Bandbreiten-QoS-Steuerung; und/oder
vor dem Übertragen des Datenstroms Ausführen von QoS-Steuerung an einem netzseitigen Anschluss durch die Zugangsvorrichtung (13) gemäß dem Parameter für Bandbreiten-QoS-Steuerung und den Übertragungsprioritäten, nachdem eine Anzahl von logischen Kanälen mit derselben Übertragungspriorität aus unterschiedlichen anwenderseitigen Anschlüssen an dem netzseitigen Anschluss kombiniert sind.

8. QoS-Steuerungsverfahren nach Anspruch 1, **dadurch gekennzeichnet, dass** die Funktionsentität (11) für das Management logischer Verbindungen in der Zugangsvorrichtung (13) integriert ist.

9. Zugangsvorrichtung, **dadurch gekennzeichnet, dass** sie Folgendes umfasst:
eine Funktionsentität (11) für das Management logischer Verbindungen;
eine Identifizierungseinheit (131), die konfiguriert ist, eine Übertragungspriorität eines Datenstroms, der einem logischen Verbindungskanal entspricht, gemäß einer Beziehung zwischen Übertragungsprioritäten eines Datenstroms und logischen Verbindungskanälen von Datenströmen zu identifizieren; wobei der logische Verbindungskanal durch die Funktionsentität (11) für das Management logischer Verbindungen einem Datenstrom gemäß der Übertragungspriorität des Datenstroms zugewiesen werden kann; und
eine QoS-Steuerungseinheit (132), die konfiguriert ist, QoS-Steuerung über einen Datenstrom über den logischen Verbindungskanal gemäß der Übertragungspriorität, die dem logischen Verbindungskanal entspricht, auszuführen; wobei der Datenstrom von einer Endgerätevorrichtung (12) über den logischen Verbindungskanal empfangen werden kann; wobei eine Information über eine Datenstrom-Klassifizierung und den logischen Verbindungskanal ausgelegt ist, an eine Endgerätevorrichtung (12) durch die Funktionsentität (11) tür das Management logischer Verbindungen zu melden, und der Datenstrom von der Endgerätevorrichtung (12) über den logischen Verbindungskanal übertragen wird, nachdem er gemäß der Datenstromklassifizierung hinein klassifiziert worden ist.

10. Zugangsvorrichtung nach Anspruch 9, **dadurch gekennzeichnet, dass** die Zugangsvorrichtung ferner konfiguriert ist, QoS-Steuerung über den Datenstrom über den logischen Verbindungskanal gemäß einem Parameter für Bandbreiten-QoS-Steuerung, der dem logischen Verbindungskanal entspricht, auszuführen.

11. Zugangsvorrichtung nach Anspruch 9, **dadurch gekennzeichnet, dass** die QoS-Steuerungseinheit (132) Folgendes umfasst:
eine anwenderseitige QoS-Steuerungseinheit, die konfiguriert ist, QoS-Steuerung über den empfangenen Datenstrom an einem anwenderseitigen Anschluss gemäß der Übertragungspriorität, der der logische Verbindungskanal an dem Anschluss entspricht,
und dem Parameter für Bandbreiten-QoS-Steuerung auszuführen; und/oder eine netzseitige QoS-Steuerungseinheit, die konfiguriert ist, QoS-Steuerung an einem netzseitigen Anschluss gemäß den Parametern für Bandbreiten-QoS-Steuerung und Datenstromübertragungsprioritäten auszuführen, nachdem der Datenstrom mit derselben Übertragungspriorität von unterschiedlichen anwenderseitigen Anschlüssen an dem netzseitigen Anschluss kombiniert wird und bevor jeder Datenstrom übertragen wird.

12. Zugangsvorrichtung nach einem der Ansprüche 9 bis 11, **dadurch gekennzeichnet, dass** die Beziehung zwischen Übertragungsprioritäten von Datenströmen und logischen Verbindungskanälen von Datenströmen von einer Funktionsentität (11) für das Management logischer Verbindungskanäle übertragen wird.

## Revendications

1. Procédé de contrôle de la Qualité de Service, QoS, **caractérisé en ce qu'**il comprend :
la réception, par un équipement d'accès (13), d'informations concernant un canal de liaison logique et concernant une priorité de transmission d'un flux provenant d'une entité fonctionnelle de gestion de liaison logique (11), dans lequel le canal de liaison logique est assigné à un flux par l'entité fonctionnelle de gestion de liaison logique (11) en fonction de la priorité de transmission du flux,
la réception, par l'équipement d'accès (13), d'un flux provenant d'un équipement terminal (12) par l'intermédiaire du canal de liaison logique, dans lequel une information sur une classification de flux et sur le canal de liaison logique est notifiée à l'équipement terminal (12) par l'entité fonctionnelle de gestion de liaison logique (11), et le flux est transmis depuis l'équipement terminal (12) par l'intermédiaire du canal de liaison logique après avoir été classé en fonction de la classification de flux,
l'identification, par l'équipement d'accès (13), d'une priorité de transmission du flux reçu correspondant au canal de liaison logique en fonction d'une relation entre des priorités de transmission et des canaux de liaisons logiques, le canal de liaison logique étant assigné au flux en fonction de la priorité de transmission du flux, et
l'exécution, par l'équipement d'accès (13), d'un contrôle de qualité de service QoS sur le flux reçu par l'intermédiaire du canal de liaison logique en fonction de la priorité de transmission.

2. Procédé de contrôle de la qualité de service QoS selon la revendication 1, **caractérisé en ce que** le flux est l'un des flux dans lesquels le message de données utilisateur est classé par l'équipement terminal (12).

3. Procédé de contrôle de la qualité de service QoS selon la revendication 1, **caractérisé en ce que** le procédé comprend en outre :
la réception d'un paramètre pour le contrôle de la qualité de service QoS en bande passante,
et l'étape d'exécution d'un contrôle de la qualité de service QoS sur le flux par l'intermédiaire du canal de liaison logique en fonction de la priorité de transmission comprend :
l'exécution d'un contrôle de la qualité de service QoS sur le flux par l'intermédiaire du canal de liaison logique en fonction de la priorité de transmission et du paramètre pour le contrôle de la qualité de service QoS en bande passante.

4. Procédé de contrôle de la qualité de service QoS selon l'une quelconque des revendications 1 à 3, **caractérisé en ce que**, dans la relation entre les priorités de transmission de flux et les canaux de liaisons logiques de flux :
différents canaux de liaisons logiques sont assignés à différentes priorités de transmission, et
différents canaux de liaisons logiques ou le même canal de liaison logique sont assignés aux mêmes priorités de transmission.

5. Procédé de contrôle de la qualité de service QoS selon la revendication 4, **caractérisé en ce que** le canal de liaison logique assigné est identifié grâce à une identification du canal de liaison logique.

6. Procédé de contrôle de la qualité de service QoS selon la revendication 5, **caractérisé en ce que** l'identification du canal de liaison logique comprend une identification d'un réseau local virtuel (VLAN ID) ou une identification d'un circuit virtuel permanent (PVC ID).

7. Procédé de contrôle de la qualité de service QoS selon la revendication 3, **caractérisé en ce que** l'étape d'exécution d'un contrôle de la qualité de service QoS sur le flux par l'intermédiaire du canal de liaison logique en fonction de la priorité de transmission et du paramètre pour le contrôle de la qualité de service QoS en bande passante comprend :
après la réception du flux, l'exécution d'un contrôle de la qualité de service QoS pour le flux reçu au niveau d'un port côté utilisateur, en fonction de la priorité de transmission du canal de liaison logique au niveau du port et du paramètre pour le contrôle de la qualité de service QoS en bande passante, et/ou
avant la transmission du flux, l'exécution, par l'équipement d'accès (13), d'un contrôle de la qualité de service QoS au niveau d'un port côté réseau en fonction du paramètre pour le contrôle de la qualité de service QoS en bande passante et des priorités de transmission, après que sont combinés un certain nombre de canaux logiques présentant la même priorité de transmission en provenance de différents ports côté utilisateurs au niveau du port côté réseau.

8. Procédé de contrôle de la qualité de service QoS selon la revendication 1, **caractérisé en ce que** l'entité fonctionnelle de gestion de liaison logique (11) est intégrée dans l'équipement d'accès (13).

9. Équipement d'accès, **caractérisé en ce qu'**il comprend :
une entité fonctionnelle de gestion de liaison logique (11),
une unité d'identification (131), configurée pour identifier une priorité de transmission concernant un flux correspondant à un canal de liaison logique en fonction d'une relation entre des priorités de transmission d'un flux et des canaux de liaisons logiques de flux, dans lequel le canal de liaison logique peut être assigné par l'entité fonctionnelle de gestion de liaison logique (11) à un flux en fonction de la priorité de transmission du flux, et
une unité de contrôle de la qualité de service QoS (132), configurée pour exécuter un contrôle de la qualité de service QoS sur un flux par l'intermédiaire du canal de liaison logique en fonction de la priorité de transmission correspondant au canal de liaison logique, dans lequel le flux peut être reçu en provenance d'un équipement terminal (12) par l'intermédiaire du canal de liaison logique, dans lequel une information sur une classification de flux et sur le canal de liaison logique est adaptée pour effectuer une notification à un équipement terminal (12) par l'entité fonctionnelle de gestion de liaison logique (11), et le flux est transmis depuis l'équipement terminal (12) par l'intermédiaire du canal de liaison logique après avoir été classé en fonction de la classification de flux.

10. Équipement d'accès selon la revendication 9, **caractérisé en ce que** l'équipement d'accès est en outre configuré pour effectuer un contrôle de la qualité de service QoS sur le flux par l'intermédiaire du canal de liaison logique en fonction d'un paramètre de contrôle de la qualité de service QoS en bande passante correspondant au canal de liaison logique.

11. Équipement d'accès selon la revendication 9, **caractérisé en ce que** l'unité de contrôle de la qualité de service QoS (132) comprend :
une unité de contrôle de la qualité de service QoS du côté utilisateur, configurée pour effectuer un contrôle de la qualité de service QoS sur le flux reçu au niveau d'un port côté utilisateur, en fonction de la priorité de transmission à laquelle correspond le canal de liaison logique au niveau du port ainsi que du paramètre pour le contrôle de la qualité de service QoS en bande passante, et/ou
une unité de contrôle de la qualité de service QoS du côté réseau, configurée pour exécuter un contrôle de la qualité de service QoS au niveau d'un port côté réseau en fonction des paramètres de contrôle de la qualité de service QoS en bande passante et de priorités de transmission de flux après que sont combinés les flux avec la même priorité de transmission provenant de différents ports côté utilisateurs au niveau du port côté réseau, et avant que chaque flux soit transmis.

12. Équipement d'accès selon l'une quelconque des revendications 9 à 11, **caractérisé en ce que** la relation entre les priorités de transmission de flux et les canaux de liaisons logiques de flux est transmise à partir d'une entité fonctionnelle de gestion de liaison logique (11).
